Europäisches Patentamt

**European Patent Office**

Office européen des brevets

(19)

(11) Numéro de publication: **0 011 543**
**B1**

(12) **FASCICULE DE BREVET EUROPEEN**

(45) Date de publication du fascicule du brevet: **08.06.83**

(51) Int. Cl.³: **H 04 N 7/00, H 04 N 1/18**

(21) Numéro de dépôt: **79400821.9**

(22) Date de dépôt: **05.11.79**

(54) **Procédé pour enregistrer sur un support matériel à deux dimensions une image de télévision et moyens pour le mettre en oeuvre.**

(30) Priorité: **13.11.78 FR 7832431**

(43) Date de publication de la demande:
**28.05.80 Bulletin 80/11**

(45) Mention de la délivrance du brevet:
**08.06.83 Bulletin 83/23**

(84) Etats contractants désignés:
**DE GB NL SE**

(56) Documents cités:
**FR - A - 2 309 091**
**US - A - 3 259 690**
**US - A - 3 377 423**

(73) Titulaire: **Etablissement Public de Diffusion dit "Télédiffusion de France"**
**21-27 rue Barbès**
**F-92120 Montrouge (FR)**
(73) Titulaire: **L'Etat Français représenté par le Secrétaire d'Etat aux Postes et Télécommunications**
**(Centre National d'Etudes des Télécommunications) 38-40 rue du Général Leclerc**
**F-92131 Issy-les-Moulineaux (FR)**

(72) Inventeur: **Luneau, Christiane épouse Schwartz**
**1, rue de la Prée**
**F-35510 Cesson (FR)**
Inventeur: **Pajus, Jean Abel**
**Chemin de Pratel**
**F-38330 Ismier (FR)**

(74) Mandataire: **Le Guen, Louis François et al,**
**13, rue Emile Bara BP 91**
**F-35802 Dinard Cedex (FR)**

Courier Press, Leamington Spa, England.

**0 011 543**

Procédé pour enregistrer sur un support matériel à deux dimensions une image de
télévision et moyens pour le mettre en oeuvre

La présente invention concerne un procédé permettant d'enregistrer sur un support matériel à deux dimensions une image apparaissant sur un écran de télévision. Elle concerne également les combinaisons de moyens permettant de mettre en oeuvre le procédé. Elle concerne plus particulièrement l'enregistrement sur un support d'images synthétiques de télévision, telles que des images comportant des textes ou des graphiques.

Actuellement, plusieurs organisations mettent au point des services de télétexte, c'est à dire des services d'information consistant à distribuer au public ou à des catégories d'abonnés des pages de texte ou de graphiques, pouvant contenir des cartes ou des informations du même type, qui sont transmises sous forme numérique et sont affichées sur un écran de récepteur de télévision. Parmi de tels services de télétexte, on peut citer le système ANTIOPE développé en France, dont on pourra trouver une description dans la revue technique française "Radiodiffusion-télévision", N° 40, 1975, pages 18 à 23, le système CEEFAX développé au Royaume-Uni, dont on pourra trouver une description dans la revue anglaise "GEC Journal Of Science & Technologie", Vol. 41, N° 4, 1974, pages 117 à 124, le système ORACLE proche du précédent, le système VIEWDATA dont on pourra trouver une description dans l'article intitulé "View data" par S. Fedida paru dans la revue "Wireless World" d'avril 1977, et le système TIC TAC dont on pourra trouver une description dans l'article intitulé "TIC TAC un terminal domestique" par C. Carouge, paru dans la revue française "Revue 2000" N° 38, pages 20 et 21.

Dans ces systèmes de télétexte, les caracteurs élémentaires, à afficher pour constituer des lignes de texte sur l'écran, sont inclus dans des rectangles jointifs horizontalement et verticalement. Des caractères graphiques sont également prévus pour l'affichage de courbes ou graphiques. Ils sont obtenus par la division du rectangle en six pavés élémentaires mis en oeuvre indépendamment. Les pavés allumés d'un rectangle donné ont une couleur uniforme tandis que le fond, les pavés non éclairés du rectangle, a une autre couleur. Les plages de couleurs ainsi obtenues sont utiles pour le dessin de cartes, par exemple.

Les codes de transmission des caractères d'écriture et des caractères graphiques sont définis suivant des normes internationales, telles que la norme ISO 646.

Il en résulte de ce qui précède que les services de télétexte sont susceptibles d'apporter au public, ou au moins aux abonnés du service, de nombreuses informations qu'il peut sélectionner. Toutefois, pour l'usager ces informations ne sont accessibles que par la vision de l'écran. Or, dans de nombreux cas, il est souhaitable d'enregistrer les informations sur un support, tel qu'une feuille de papier.

Un objet de la présente invention consiste à prévoir un procédé d'enregistrement sur un support matériel à deux dimensions d'une image stationnaire affichée sur un écran de récepteur de télévision, d'oscillographe ou en général d'un appareil exploitant des signaux vidéo.

Un autre objet de la présente invention consiste à prévoir un procédé d'enregistrement monochrome permettant de rendre les couleurs des plages graphiques formées de pavés juxtaposés en faisant varier la densité de points monochromatiques au cours de l'impression sur le support matériel.

Un autre objet de la présente invention consiste à prévoir un procédé d'enregistrement permettant l'utilisation d'une machine imprimante dite à "matrice" capable d'imprimer simultanément plusieurs points.

Dans le domaine technique de l'enregistrement d'images sur des supports matériels à deux dimensions, utilisant des têtes à plusieurs points, on peut citer le brevet français FR—A—2 309 091. Dans ce brevet, on décrit un système dans lequel, à l'émission, on utilise une réglette de photodiodes déplacées dans la direction des lignes, la réglette étant perpendiculaire aux lignes. Les informations recueillies par les photodiodes de la réglette sont classées par ligne dans les registres $S_1$ à $S_k$ (ou $S_{k+1}$ à $S_{2k}$); puis les informations sont transmises ligne par ligne. A la réception, on met en mémoire les informations des k lignes; puis on les lit pour alimenter une tête d'impression multiple dont la direction est perpendiculaire aux lignes. En résumé, dans ce système connu, on transmet les informations ligne par ligne et les têtes d'écriture et de lecture se déplacent parallèlement aux lignes. Toutefois, ce système ne permettrait le transfert de données de télétexte qu'à la condition de prévoir, avant l'impression, un enregistrement en mémoire des données numériques d'un nombre de lignes égal à celui des points de la tête d'impression, ce qui conduirait à prévoir des mémoires de grande capacité, donc chères pour être utilisées dans un appareil d'abonné. Par ailleurs, il faudrait utiliser une tête d'impression capable d'imprimer de l'ordre de 400 points dans le sens transversal, ce qui ne peut être effectué qu'avec une imprimante très chère.

Un objet de l'invention consiste à prévoir un procédé d'enregistrement ne souffrant pas de ces inconvénients.

Suivant une caractéristique de la présente invention, il est prévu un procédé d'enregistrement sur un support matériel à deux dimensions, conformement à la revendication 1.

Suivant une autre caractéristique, au cours de la transmission des données binaires vers la tête d'impression, lesdites données binaires passent dans une mémoire tampon, d'où elles sont lues vers ladite tête d'impression, leur écriture étant effectuée ligne par ligne en sélectant les données de points de la colonne en cours d'impression et de la ligne qui suit celle dont les données ont déjà été écrites dans ladite mémoire tampon, ladite sélection des données à écrire étant effectuée soit sur la même trame de signaux vidéo, soit sur des trames différentes.

Suivant une autre caractéristique, quand le procédé s'applique à des images comportant des plages coloriées dont les nuances sont déterminées par des combinaisons de couleurs primaires, qui sont numérisées séparément en code binaire, chaque donnée numérisée de couleur primaire est transformée suivant un algorithm $A_i^j$, où $j$ identifie la couleur primaire et $i$ est le rang du point une ligne horizontale, en un signal binaire qui est réuni avec les signaux binaires transformés des autres données de couleurs primaires du même point avant d'être imprimé.

Suivant une autre caractéristique, d'une ligne horizontale à la suivante, l'algorithme $A_i^j$ varie en fonction de $i$.

Suivant une autre caractéristique, il est prévu un système pour enregistrer sur un support matériel à deux dimensions une image de télévision stationnaire, conformément à la revendication 5.

Suivant une autre caractéristique, le système comprend une mémoire tampon fonctionnant alternativement en mode d'écriture, pour emmagasiner les données d'une ou d'un nombre entier de colonnes, et en mode de lecture, pour alimenter la machine imprimante, un compteur de lignes dont la sortie de compte est reliée à l'entrée d'adressage d'écriture de ladite mémoire et dont la sortie de débordement est reliée à un circuit commutation écriture-lecture pour commander le passage en mode lecture et le fonctionnement de la machine imprimante, le circuit de commutation écriture-lecture étant commuté par la détection de l'avancement du support matériel dans la machine imprimante pour commander le passage de la mémoire en mode écriture et la remise à zéro du compteur de lignes.

Suivant une autre caractéristique, pour traiter des images de télévision en couleur, les moyens de numérisation numérisent les signaux de chrominance pour délivrer par point trois données binaires de couleurs primaires, en plus des signaux binaires de luminance, les sorties de chrominance des moyens de numérisation étant reliées aux entrées correspondantes d'un circuit de traduction matriciel qui comportent $x$ entrées de commande verticales, des points de croisement étant prévus sélectivement à des intersections entre les horizontales et les verticales de la matrice du traducteur, chaque point de croisement reliant l'entrée reliée à son horizontale à la sortie du traducteur quand l'entrée reliée à sa verticale est activée, les entrées verticales étant respectivement reliées aux sorties parallèles d'un registre à $x$ cellules dont l'entrée d'horloge est reliée à la sortie d'une seconde porte ET à deux entrées dont une entrée reçoit les signaux d'horloge de numérisation et une entrée est reliée à la sortie d'un registre à retard programmable comportant une entrée de déclenchement recevant la synchro ligne, une entrée d'horloge recevant l'horloge de numérisation et une entrée de commande manuelle, le registre à $x$ cellules comportant encore une entrée d'initialisation recevant la synchro trame, la sortie du traducteur étant reliée à une entrée d'une troisième porte ET à deux entrées dont l'autre entrée est reliée à une entrée de commande et dont la sortie est reliée à une entrée d'une porte OU à deux entrées, l'entrée de commande étant reliée par un inverseur à une entrée d'une quatrième porte ET à deux entrées dont la seconde entrée est reliée à la sortie luminance des moyens de numérisation et dont la sortie est reliée à la seconde entrée de la porte OU dont la sortie est reliée à l'entrée série du registre à décalage à $k$ étages.

Il apparaîtra que, suivant l'invention, les informations d'images de télévision sont transmises ligne par ligne, mais qu'elles sont traitées, dans le sens perpendiculaire aux lignes, colonne par colonne, c'est à dire que les informations sont transmises ligne par ligne, mais que la tête d'impression se déplace perpendiculairement aux lignes et est orientée dans la direction des lignes. Il y a une rotation de 90° par rapport au système du brevet français cité ci-dessus.

Les caractéristiques de l'invention mentionnées ci-dessus ainsi que d'autres apparaîtront plus clairement à la lecture de la description suivante d'un exemple de réalisation, ladite description étant faite en relation avec les dessins joints, parmi lesquels:

la Fig. 1 est une vue schématique de la zone d'affichage d'un écran de téléviseur servant à illustrer le procédé d'enregistrement et d'impression suivant l'invention,

la Fig. 2 est le bloc-diagramme d'un circuit d'interface qui est monté l'entrée vidéo fréquence d'un récepteur de télévision et une machine imprimante, et utilisé pour mettre en oeuvre le procédé suivant l'invention,

la Fig. 3 est un bloc-diagramme d'une variante du circuit d'interface de la Fig. 2, et

la Fig. 4 est un schéma d'un circuit convertisseur utilisable dans le circuit d'interface de la Fig. 2 ou de la Fig. 3.

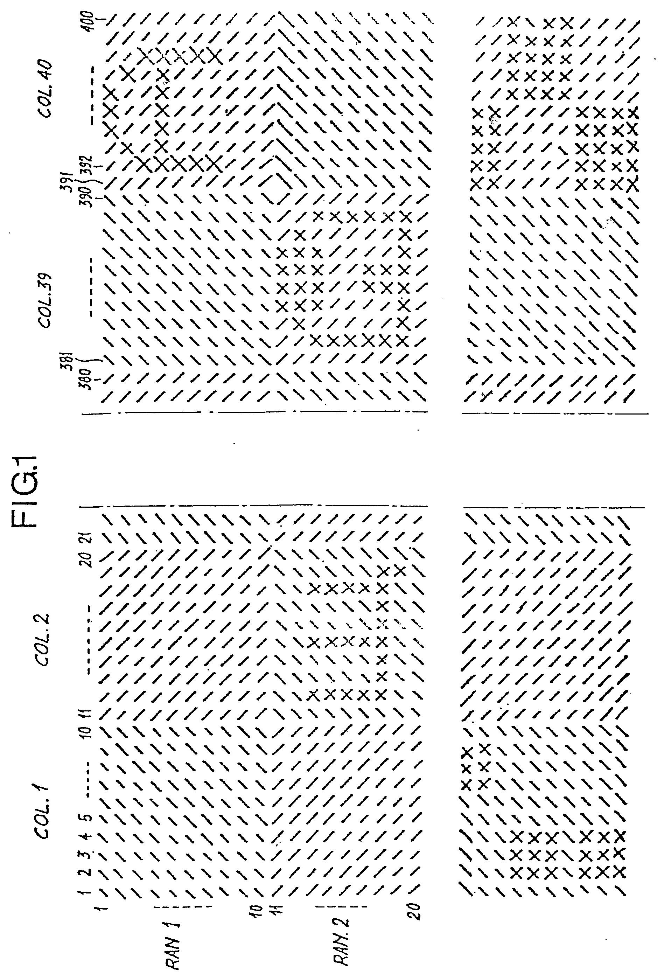

A la Fig. 1, on a indiqué par des petits traits obliques les points qui, dans des systèmes de télétexte qui ont été définis ci-dessus sont allumés ou éteints pour faire apparaître l'image à afficher. L'ensemble des points de la zone d'affichage est divisé en pavés ou rectangles de $10 \times 10$ points. D'un pavé au pavé voisin, la direction des traits obliques change. Chaque pavé peut être identifié par deux coordonnées, celles de la rangée horizontale et celles de la colonne auxquelles il appartient.

On va supposer tout d'abord que l'image de télévision est monochrome, un point allumé étant blanc et un point éteint étant noir. A titre indicatif, on suppose également que la zone d'affichage comprend 25 rangées de pavés et que chaque rangée comprend 40 pavés, ce qui correspond à 40 colonnes. Les rangées sont numérotées de RAN 1 à RAN 25 et les colonnes de COL 1 à COL 40.

Par ailleurs, on suppose que l'on utilise une machine imprimante pourvue d'une tête d'impression à 10 points alignés, c'est à dire une machine pourvue d'une tête d'impression à 10 aiguilles ou électrodes ou tout autre dispositif capable d'imprimer un point, le nombre 10 étant pris à titre d'exemple. Il peut sans inconvénient être différent du format des pavés. En pratique d'ailleurs, on trouve des machines à 7, 8, 12, 24, etc., électrodes d'impression.

De plus, on suppose que l'impression se fait par déplacement de la tête dans une direction perpendiculaire à la ligne formée par les aiguilles ou autres dispositifs d'impression.

Ce déplacement de la tête d'impression avec une opération d'impression périodique permet d'enregistrer sur un support approprié les informations contenues dans une colonne ayant une largeur de 10 points. Enfin, la machine est pourvue d'un mécanisme d'avancement sur papier, le pas d'avancement du papier étant égal à la largeur d'une colonne. Après l'impression de chaque colonne par avancement de la tête d'impression, le papier est avancé d'un pas tandis que la tête revient à son point initial, pour l'impression de colonnes jointives.

On peut également utiliser une machine où le papier se déplace de façon continue dans un sens particulier à celui de la tête d'impression, et qui comporte plusieurs têtes d'impression de sorte que lorsque l'une termine son impression, la suivante s'apprête à la commencer pour décrire la colonne suivante.

On va considérer une image où chaque ligne comprend 400 points horizontaux et chaque colonne 250 points verticaux. Pour effectuer le transfert de l'image affichée sur l'écran de télévision, on transmet successivement les dix éléments binaires 391 à 400 de la première ligne vers la tête d'impression de la machine imprimante, puis les éléments binaires 391 à 400 de la seconde ligne, et ainsi de suite jusqu'aux éléments binaires 391 à 400 de la 250ème ligne. Quand la machine imprimante a imprimé les 10 points de la 250ème ligne, la tête d'impression revient en face de la première ligne et le papier avance d'un pas. On transmet alors successivement les dix éléments binaires 381 à 390 de la première ligne vers la tête d'impression, puis les dix éléments binaires 381 à 390 de la seconde ligne, et ainsi de suite, jusqu'à l'impression des points 1 à 10 de la 250ème ligne.

La vitesse de fonctionnement de la machine imprimante étant nettement plus faible que la vitesse de balayage de l'écran de télévision, une mémoire tampon est montée en amont de la machine imprimante, mémoire tampon recevant les éléments binaires par paquets de dix et les paquets étant lus par la machine imprimante à son rythme propre. La mémoire tampon est du type premier entré, premier sorti.

Deux modes de fonctionnement de la mémoire sont utilisables. Dans le premier, l'entrée et la sortie des informations sont indépendantes; on doit alors connaître l'état, plein ou non plein de cette mémoire pour autoriser ou non l'arrivée d'informations. La capacité est calculée en fonction de la vitesse d'arrivée des informations (vitesse de balayage de l'écran, informations présentées à chaque trame) et de la vitesse de sortie (vitesse d'impression de la machine à chaque passe, nombre de rangées de points à imprimer à chaque passe). Dans le second cas, entrée et sortie sont liées, et la mémoire est chargée de toutes les informations nécessaires à l'impression d'une rangée complète de points par la machine; ce paramètre détermine complètement la capacité de la mémoire. Le choix entre les deux résulte d'un compromis entre le coût et la simplicité du dispositif.

Il faut également prévoir un circuit capable de sélectionner colonne par colonne les paquets d'information à transmettre à la mémoire. En pratique, le mécanisme d'avance du papier associé à un compteur désigne la colonne dont les paquets sont à transmettre ligne par ligne.

Il apparaît clairement que le procédé de l'invention permet de transformer un balayage itératif ligne par ligne du type de télévision en un balayage unique large colonne par colonne, perpendiculaire aux lignes.

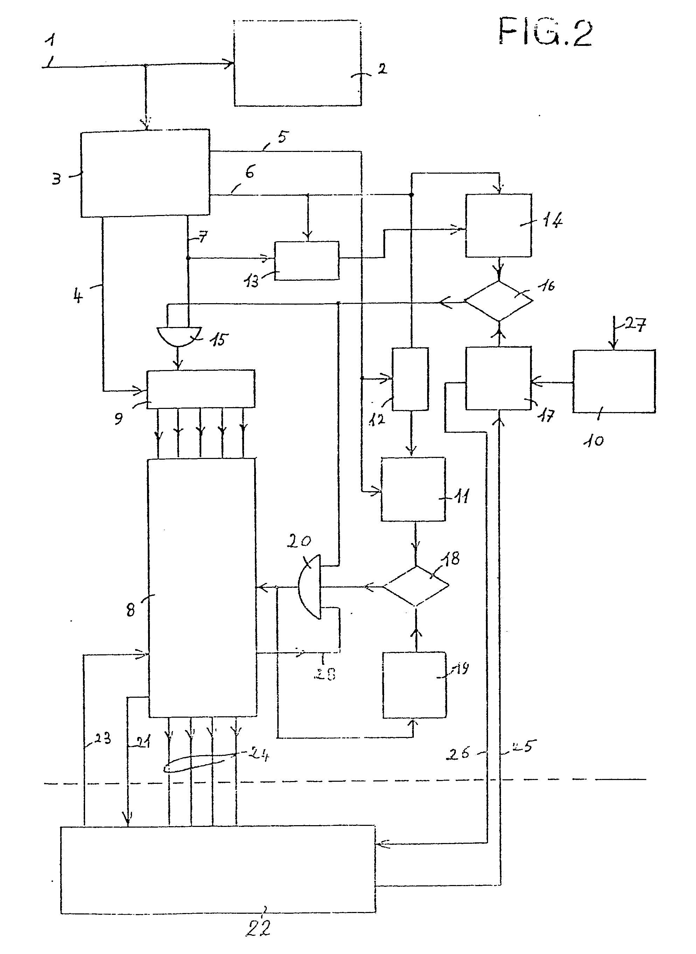

La Fig. 2 représente schématiquement le schéma-bloc d'un ensemble de circuits capables de mettre en oeuvre le procédé de transfert de l'invention. Les données à afficher sont appliquées par la borne 1, d'une part, à un récepteur de télévision 2 et à un circuit 3, d'autre part, dont on va décrire les fonctions ci-dessous.

Les données à afficher peuvent se présenter sous différentes formes: par exemple sous la forme d'un signal vidéo-fréquence synthétique, synchronisation de ligne et d'image comprises ou non, trichrome ou monochrome. Le circuit 3 a pour but d'obtenir à partir des données l'ensemble des signaux binaires suivants: luminance délivrée sur le fil 4, synchronisation trame délivrée sur le fil 5, synchronisation ligne délivrée par le fil 6, et horloge d'échantillonnage de l'image synthétique délivrée sur le fil 7.

Les circuits élémentaires contenus dans le circuit 3 sont connus et ne font pas partie de l'invention. Le signal de luminance délivré en 4 est formé de suites de "1" et de "0" selon que le point correspondant est blanc ou noir.

Le circuit d'interface de la Fig. 2 comprend une mémoire tampon 8 dont les entrées et les sorties de données sont gérées indépendamment.

La sortie 4 du circuit 3 est reliée à l'entrée série de données d'un registre à décalage 9 dont les sorties parallèles sont reliées aux entrées de données de la mémoire 8. La sortie 5 du circuit 3 est reliée, d'une part, à l'entrée d'initialisation d'un circuit de commande 10, d'autre part, à l'entrée RAZ d'un compteur de ligne 11 et, enfin, à l'entrée RAZ d'un registre à décalage 12. La sortie 6 du circuit 3 est reliée, d'une part, à l'entrée RAZ d'un compteur de points 13, d'autre part, à l'entrée RAZ d'un compteur de colonnes 14, et, enfin, à l'entrée série du registre 12. La sortie 7 du circuit 3 est reliée d'une part, à l'entrée de données du compteur 13 et, d'autre part, à la première entrée d'une porte ET 15 dont la sortie est reliée à l'entrée d'horloge du registre 9.

Le compteur 13 est un compteur cyclique dont la capacité maximale est égale au nombre d'aiguilles de la tête d'impression alimentée par le circuit d'interface soit dans l'exemple de réalisation décrit une capacité de 10 points. La sortie de débordement du compteur 13 est reliée à l'entrée de commande du compteur 14. La sortie de compte du compteur 14 est reliée à la première entrée d'un comparateur 16 dont la second entrée est reliée à la sortie de compte d'un second compteur de colonnes 17 et dont la sortie est reliée à la seconde entrée de la porte ET 15.

Le registre 12 est un simple registre à décalage servant de ligne à retard de manière à ne transmettre au compteur 11, auquel sa sortie est reliée, les signaux de synchronisation de ligne qu'avec un certain décalage, qui définit la marge haute à partir de laquelle l'image doit être reproduite. Le compteur 11 a une capacité maximale égale au nombre des lignes de la partie d'image à reproduire, soit dans l'exemple décrit 250. La sortie du compte du compteur 11 est reliée à la première entrée d'un second comparateur 18 dont la seconde entrée est reliée à la sortie de compte d'un compteur de lignes 19 et dont la sortie est reliée à la première entrée d'une porte ET 20 à trois entrées. La seconde entrée de la porte 20 est reliée à la sortie du comparateur 16, sa troisième entrée est reliée à la sortie de contrôle de la mémoire 8 indiquant que cette mémoire n'est pas pleine, et sa sortie est reliée, d'une part, à l'entrée de commande d'inscription dans la mémoire 8 et, d'autre part, à l'entrée de signal du compteur 19. Le compteur 19 a une capacité de 250 et son contenu indique le numéro de la ligne d'image à reproduire dont les points sont les derniers entrés dans la mémoire 8.

Dès que les données de points ont été introduites dans la mémoire 8, celle-ci, dont la sortie 21 est reliée à l'entrée de commande d'une imprimante 22, active la sortie 21. La sortie 23 de l'imprimante 22 est reliée à l'entrée de commande de sortie de la mémoire 8. La sortie de données 24 de la mémoire 8 est reliée à l'entrée de données de l'imprimante 22. L'imprimante 22 comporte encore une sortie 25 qui est activée chaque fois que la tête de l'imprimante a terminé l'impression d'une rangée, laquelle correspond à une colonne de l'image de télévision. La sortie 25 est reliée à l'entrée de signal du compteur 17 dont la sortie de débordement est reliée à l'entrée 26 de l'imprimante et est activée quand le compte dans 17 déborde ce qui indique que les 40 colonnes ont été imprimées et que l'imprimante doit s'arrêter.

Le circuit 10 comporte une entrée de commande 27, qui peut être actionnée par un opérateur, et une sortie reliée à l'entrée d'initialisation du compteur 17.

On va décrire maintenant le fonctionnement du circuite d'interface de la Fig. 2 en supposant qu'à l'instant initial tous les compteurs ou registres sont vides ainsi que la mémoire 8.

L'opérateur actionne le bouton qui active l'entrée 27 du circuit 10. Le compteur de colonnes 17 est remis à zéro. Donc la sortie de compte de 17 vers 16 est à "39". Par ailleurs, le contenu deu compteur 19 est "1" indiquant que les premiers points à entrer dans la mémoire 8 doivent appartenir à la ligne de télévision N° 1 de l'image à reproduire.

Après le signal de synchronisation de trame délivré par 5, pendant toutes les lignes de la marge supérieure, on aura bien égalité dans le comparateur 16 pour les points de la colonne "39" et donc activation d'une entrée de la porte 20. Toutefois, comme le compteur 11 est à "0" et ne reçoit pas encore de signal à travers 12, il n'y a pas d'égalité sur le comparateur 18 si bien que la porte 20 ne peut autoriser l'inscription de données dans la mémoire 8.

Dès que le circuit 12 délivre un signal à 11, on a égalité sur 18, la sortie de contrôle 28 de la mémoire 8 indique qu'elle n'est pas pleine, si bien que, quand on a égalité entre 14 et 17, c'est à dire que le compteur 13 a compté 10 points d'horloge après la remise à zéro par 6, la sortie du comparateur 16 ouvre la porte 20 qui fait inscrire dans 8 en parallèle le contenu du registre 9, qui, à cet instant, contient les données des points 391 à 400 de la ligne N° 1 à enregistrer. Le compteur 19 passe à l'état "2". Donc, à la ligne suivante, qui est la ligne N° 2, on a de nouveau égalité sur 16 et 18 et le processus se répète. Quand la mémoire 8 est pleine, par exemple près avoir inscrit les données de 20 lignes, la sortie 28 inhibe la porte 20. Donc, l'inscription s'arrête, mais le registre 19 contient le N° de la prochaine ligne à inscrire.

Pendant ce temps, d'une manière indépendante, la sortie 21 de 8 est activée, si bien que, par 23, l'imprimante 22 appelle des données à la sortie 24 de 8. En pratique, l'imprimante rythme la sortie des données par 23.

Dès que la mémoire 8 a commencé à se vider, on a, au cours d'une trame de télévision, une nouvelle égalité dans 18 entre les contenus de 11 et 19. Donc on inscrit les données de la ligne correspondante. le processus se poursuit jusqu'à l'inscription de la 250ème ligne, en ce qui concerne les points 391 à 400, par l'imprimante 22. A ce moment, le fil 25 est activé, ce qui décrémente le compteur 17 et fait passer le contenu du compteur 19 à "1".

On se retrouve alors dans le cas initial, sauf que 17 contient maintenant le compte "38". Donc, le comparateur 16 ne donnera un résultat positif que, quand les points 381 à 390 sont dans le registre 9. On va donc procéder à l'inscription de la colonne 39, et ainsi de suite.

Quand la colonne "1" a été inscrite par 22, la sortie de remise à "0" 26 de 17 met l'imprimante à l'arrêt.

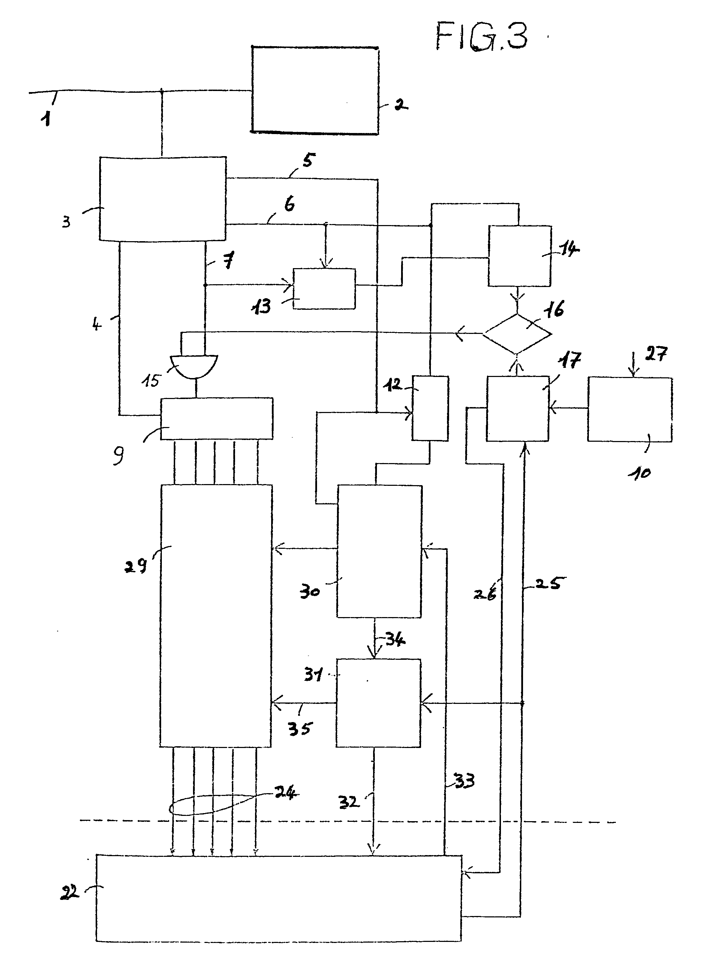

Le circuit d'interface de la Fig. 3 comprend les mêmes circuits d'entrée en mémoire que ceux de la Fig. 2. Toutefois, la mémoire 8 à commandes d'inscription et de lecture indépendantes y est remplacée par une mémoire 29 capable d'enregistrer les données complètes d'une colonne, soit 2500 points, ou d'un nombre entier de colonnes avant de pouvoir commencer à être lue. L'entrée de données de la mémoire 29 est reliée à la sortie du registre 9. Le compteur 11 est remplacé par un compteur 30 qui compte les signaux transmis par 12 et dont les sorties de compte sont reliées aux entrées d'addressage de la mémoire 29 qui inscrit donc les données fournies par 9 à chaque fois qu'il y a coïncidence dans 16, aux adresses fournies par 30. Le comparateur 16 active le registre 9 par l'intermédiaire de la porte 15.

Le compteur 30 comporte une sortie de débordement 34 qui est reliée à un circuit de commutation inscription-lecture 31 qui, quand il est commuté, fait passer, par 35, la mémoire 29 en mode lecture et, par 32, indique à l'imprimante 22 qu'elle peut commencer son opération d'impression. Par 33, l'imprimante 22 incrémente le compteur 30 qui adresse les données à lire dans la mémoire 29 et à envoyer à l'imprimante 22 par la liaison 24. A la fin de l'impression d'une colonne, l'imprimante 22 incrémente, par 25, le compteur 17 et commute le circuit 31 en position d'inscription. Le compteur 30 est alors à zéro et les données de la colonne suivante peuvent être inscrites dans 29 pour l'impression suivante, et ainsi de suite, jusqu'à la fin de l'impression de la dernière colonne qui est signalée par le débordement du compteur 17.

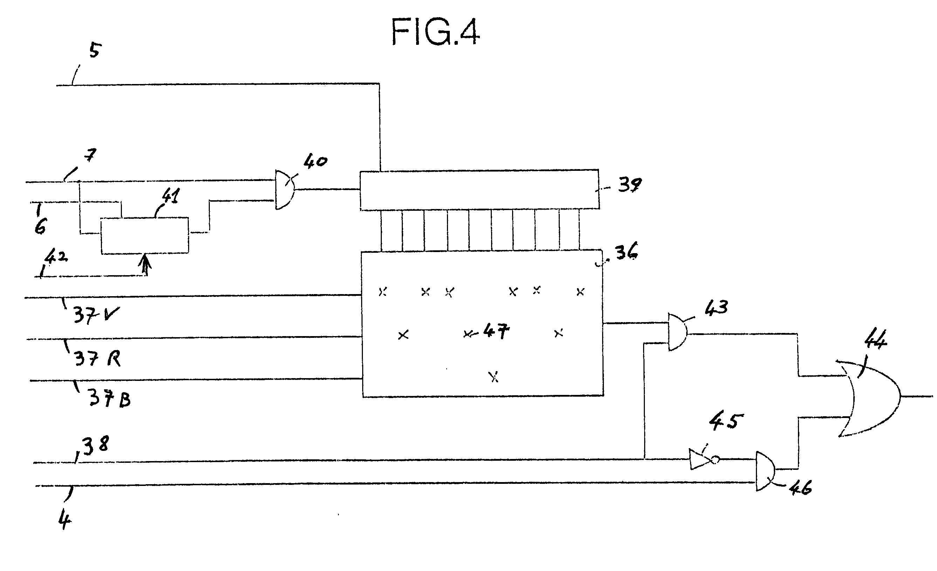

La Fig. 4 montre en détail un circuit de traitement, qui peut être monté dans les circuits d'interface des Figs. 2 et 3, entre la sortie de signal du circuits 3 et l'entrée de signal du registre 9, et qui permet le transférer sur le support d'impression de la machine imprimante 22 des informations concernant des plages coloriées de l'image de télévision. Il comprend un fil d'entrée 4 relié à la sortie de 3 et transmettant la luminance, et trois fils 37V, 37R et 37B transmettant respectivement les signaux de chrominance binaires vert, rouge et bleu. Il comprend encore un fil de commande 38 dont le signal d'entrée est à "1" quand les informations à transmettre à 22 sont relatives à des plages d'image coloriées et à "0" dans le cas contraire. On verra dans la suite comment on détermine l'état binaire du signal appliqué au fil 38. Par ailleurs, le circuit est relié aux fils 5, 6 et 7, Fig. 2 de manière à recevoir les signaux de synchronisation de trame, de ligne et de points.

Les fils 37V, 37R et 37B sont respectivement reliée à trois entrées horizontales d'un circuit de traduction 36 qui comporte 10 entrées de commande verticales respectivement reliées aux 10 sorties d'un registre 39 comportant 10 cellules. L'entrée d'horloge du registre 39 est reliée à la sortie d'une porte ET 40 dont la première entrée est reliée au fil 7 délivrant l'horloge de points et dont la seconde entrée est reliée à la sortie d'un registre à retard programmable 41 dont l'entrée de déclenchement reçoit le signal de synchronisation ligne par 6 et l'entrée d'avancement l'horloge de points par 7. Le registre 41 comporte encore une entrée de commande manuelle 42 dont on verra le rôle dans la suite. Le registre 39 comporte encore une entrée d'initialisation recevant le signal de synchronisation de trame par 5.

Par ailleurs, la sortie du traducteur 36 est reliée à la première entrée d'une porte ET 43 dont la seconde entrée est reliée à l'entrée de commande 38 et dont la sortie est reliée à une entrée d'une porte OU 44. L'entée 38 est encore reliée, par l'intermédiaire d'un inverseur 45, à la première entrée d'une porte ET 46 dont la seconde entrée est reliée à l'entrée de luminance 4 et dont la sortie est reliée à une autre entrée de la porte OU 44. La sortie de la porte OU 44 est reliée à l'entrée de signal du registre 9, Fig. 2 ou 3.

Le circuit de traduction 36 est une matrice de points de croisement 47, qui sont placés d'une manière sélective aux croisements de lignes horizontales prolongeant les fils 37V, 37R, 37B, et de lignes verticales prolongeant les fils de sorties parallèles du registre 39. A chaque fois qu'une ligne horizontale et une ligne verticale sont activées simultanément, et qu'il existe un point de croisement au croisement de ces deux lignes, le traducteur 36 émet un signal vers la porte 43. En pratique, les points de croisement peuvent être des portes ET à deux entrées dont les sorties sont regroupées sur une porte OU, non montrée, dont la sortie constitue la sortie du circuit 36.

Le fonctionnement du registre 39 est tel qu'un seul de ces fils de sortie est activé à chaque signal d'horloge de points et le passage d'un signal d'horloge de points au suivant fait passer l'état d'activation d'un fil au suivant.

Comme le registre 41 a un retard programmable, il laisse passer par la porte 40 un certain nombre programmable de tops d'horloge de points, après chaque dernier point d'image. Donc d'une ligne à l'autre, on crée un décalage dans le registre 39. Si l'on suppose que ce décalage est égal à un point, cela revient à retarder d'un pas le balayage des entrées verticales du traducteur 36.

La répartition des points de croisement sur les lignes horizontales de 36, qui est figurée à titre d'exemple à la Fig. 4, correspond aux indications portées dans le tableau suivant. Ces indications sont relatives au cas de huit nuances à restituer et de plages de dix points. Les codes binaires au-dessous des noms des nuances indiquent les états des fils 37V, 37R et 37B. Les chiffres dans la colonne "registre 39" indiquent les numéros de ses sorties. Dans le tableau, un "1" indique que le point correspondant est à imprimer en noir par l'imprimante 22, ce qui correspond à un signal transmis par 36, et un "0" indique que le point correspondant doit apparaître blanc sur le papier de 22, ce qui correspond à une non transmission de signal par 36.

TABLEAU
Nuances

| Registre 39 sorties | Noir 000 | Bleu 001 | Rouge 010 | Magenta 011 | Vert 100 | Cyan 101 | Jaune 110 | Blanc 111 |
|---|---|---|---|---|---|---|---|---|
| 0 | 1 | 1 | 1 | 1 | 0 | 0 | 0 | 0 |
| 1 | 1 | 1 | 0 | 0 | 1 | 1 | 0 | 0 |
| 2 | 1 | 1 | 1 | 1 | 0 | 0 | 0 | 0 |
| 3 | 1 | 1 | 1 | 1 | 0 | 0 | 0 | 0 |
| 4 | 1 | 1 | 0 | 0 | 1 | 1 | 0 | 0 |
| 5 | 1 | 0 | 1 | 0 | 1 | 0 | 1 | 0 |
| 6 | 1 | 1 | 1 | 1 | 0 | 0 | 0 | 0 |
| 7 | 1 | 1 | 1 | 1 | 0 | 0 | 0 | 0 |
| 8 | 1 | 1 | 0 | 0 | 1 | 1 | 0 | 0 |
| 9 | 1 | 1 | 1 | 1 | 0 | 0 | 0 | 0 |

Il faut bien comprendre que le choix de huit nuances est arbitraire. Il peut être supérieur en prévoyant plus de trois fils d'entrée horizontaux sur le traducteur 36. Par ailleurs, on a choisi un registre 39 à dix points ce que correspond à des plages de dix points, mais il est bien évident que l'on peut choisir, pour le nombre d'entrées verticales de 36, tout nombre arbitraire différent de 10. En particulier, le nombre d'entrées verticales de 36 n'est pas lié au nombre de points correspondant à la largeur d'une colonne.

Par ailleurs, on pourra noter que les valeurs du tableau ci-dessus conduisent aux densités relatives suivantes de noir en fonction des huit nuances: noir, 100%; bleu, 90%; rouge, 70%; magenta, 60%; vert, 40%; cyan, 30%; jaune, 10% et blanc, 0%; ces valeurs de densités étant proches de celles qui sont utilisées pour rendre en noir et blanc des images couleur. On pourrait aisément modifier ces densités en modifiant les positions des "1" et des "0" dans le tableau ci-dessus, ce qui se traduit dans la pratique par une redistribution des points de croisement dans le traducteur 36.

On notera encore que les circuits utilisés autour de la mémoire 8 ou 29 et l'imprimante 22, dans les Figs. 2 ou 3, ainsi que ceux qui sont utilisés autour du traducteur 36 de la Fig. 4, peuvent être remplacés par d'autres circuits qui remplissent les mêmes fonctions, mais dont la technologie peut être plus moderne que celle des circuits élémentaires présentés. Ainsi, au lieu du registre 39, on peut utiliser un compteur binaire à quatre étages associé à un convertisseur de code. D'une manière plus générale, l'ensemble des opérations logiques effectuées par ces circuits logiques peuvent être réalisés en utilisant la technique des microprocesseurs.

Comme on l'a vu dans le tableau ci-dessus, le système de l'invention et, en particulier, le circuit de la Fig. 4 permet de rendre un certain nombre de nuances en présentant, pour chaque nuance, une proportion de points noirs et blancs différents. Cette fonction est remplie par le circuit de traduction 36. Toutefois, sans précaution, il apparaît que, pour une même nuance, sur une certaine étendue verticale, tous les points blancs seraient alignés verticalement ainsi que les points noirs, ce qui donnerait un enregistrement peu agréable à l'oeil. C'est pourquoi, on crée, au moyen du circuit 41, un retard d'une ligne à l'autre qui se traduit par la suppression des raies verticales. Mais il faut encore noter que l'on ne peut pas utiliser n'importe quel décalage d'une ligne à l'autre car certains décalages créent une image moirée. En fait, des expériences ont montré que l'on devait déterminer le décalage d'une ligne à la suivante en tenant compte du nombre de nuances à restituer et du nombre de points du registre 39.

Comme on l'a également mentionné plus haut, c'est l'état de l'entrée 38 de la Fig. 4 qui définit s'il y a des plages colorisées avec des nuances à restituer. Quand l'entrée 38 est à "0", le circuit de la Fig. 4 est transparent, c'est à dire que l'imprimante imprime les points selon les états binaires transmis par 4, que cette suite d'états binaires décrive des caractères ou des zones à teintes uniformes. Quand l'entrée 38 est à "1", c'est le circuit de la Fig. 4 qui, à partir des nuances des zones coloriées de l'image de télévision, détermine les points à imprimer ou non par l'imprimante.

Dans la pratique, quand l'entrée 1 est reliée à un récepteur de système de télétexte du type "ANTIOPE", mentionné dans le préambule, l'état de l'entrée 38 est obtenu dans ce récepteur de télétexte à partir des données transmises et des codes à partir des données transmises et des codes de fonction du système de télétexte. Il en serait de même avec les autres systèmes de télétexte mentionnés.

On notera encore, que, dans la description précédente, on a considéré le cas d'une imprimante qui "écrit" normalement de gauche à droite, ce qui explique que l'on commence par imprimer la 39ème colonne, puis la 38ème, etc. Il doit être bien entendu que le système de l'invention s'appliquerait également au cas d'utilisation d'une imprimante écrivant de droite à gauche, en imprimant la 1ère colonne, puis la seconde, etc. Il suffirait alors d'inverser le fonctionnement du compteur 17.

On notera également que le procédé d'enregistrement, dont l'exemple de mise en oeuvre est illustré à la Fig. 4, concernant les plages coloriées dont les nuances sont déterminées par des combinaisons de couleurs primaires, à chaque point étant associées des données de couleurs primaires numérisées, consiste, pour chaque point, à transformer chaque donnée de couleur primaire suivant un algorithme $A_i^j$, où $j$ identifie la couleur primaire et $i$ est le rang du point dans une ligne de télévision, en un signal binaire "1" ou "0", qui est réuni avec les signaux binaires transformés des autres données de couleurs primaires du même pont, avant d'être imprimé. A la Fig. 4, l'algorithme est, pour chaque couler primaire, concrétisé par une ligne de matrice du circuit de traduction 36. Comme cette ligne de matrice comporte un nombre limité $r$ de points, $r$ étant dans le cas particulier égal à 10, on a l'égalité $A_i^j = A_{i+r}^j$.

Par ailleurs, le décalage apporté d'une ligne à la suivante par le registre 39 s'exprime par le fait que d'une ligne à la suivante l'algorithme $A_i^j$ varie en fonction de i. A titre d'exemple, on peut avoir la relation suivante:

$$A_i^j(m) = A_{i-1}^j(m-1)$$

où $m$ est le numéro d'une ligne. Toutefois cette relation n'est pas limitative et d'autres peuvent être choisies si elles offrent à l'oeil une meilleure impression.

Comme on l'a dit plus haut, il faut également noter que $r$ peut être différent du nombre $k$ de lignes verticales constituant une colonne.

## Revendications

1. Procédé d'enregistrement sur un support matériel à deux dimensions, au moyen d'une machine imprimante (22) a tête multiple d'impression à $k$ points d'impression, d'une image de télévision stationaire dont les signaux vidéo sont continûment numérisés en code binaire, les échantillons binaires obtenus représentant ainsi une grille de points continûment renouvellés dont les $m$ lignes horizontales correspondent aux lignes du signal de télévision, chaque ligne horizontale de la grille comprenant $n$ points, $m$ et $n$ étant grand par rapport à $k$, la machine imprimante (22) ayant sa tête d'impression se déplaçant, en état d'impression, transversalement par rapport à la direction de décalage du support matériel et, après chaque passe transversale de la tête d'impression, le support matériel étant décalé d'une longueur correspondant à la largeur de la tête multiple d'impression, caractérisé en ce que les lignes verticales de la grille sont groupées par comptage sélectif des échantillons binaires pour former n/k colonnes (col. 1 à col. 40) comportant chacune $k$ lignes verticales (1—10 à 391—400), les données binaires des points étant transmises à ladite tête multiple d'impression en commençant par les données des points (391 à 400) de la première ligne horizontale (1) et de la dernière colonne (col. 40), puis celles de la seconde ligne horizontale (2) et de la dernière colonne (col. 40), et ainsi de suite jusqu'à celles de la $m^{ième}$ ligne horizontale de la dernière colonne, le support matériel étant alors décalé, puis les données binaires des points (381 à 390) de la première ligne horizontale (1) et de l'avant-dernière colonne (col. 39) sont transmises à ladite tête d'impression, puis celles de la seconde ligne horizontale (2) de l'avant-dernière colonne (col. 39) et ainsi de suite jusqu'à celles de la $m^{ième}$ ligne horizontale de l'avant-dernière colonne, puis le support est de nouveau décalé comme précédemment, et ces opérations de transmission de données de points entrecoupées de décalages de la tête sont répétées colonne par colonne jusqu'à imprimer les données des points 1 à 10) de la $m^{ième}$ ligne horizontale de la première colonne (col. 1).

2. Procédé d'enregistrement suivant la revendication 1, dans lequel, au cours de la transmission des données binaires vers la tête multiple d'impression, lesdites données binaires passent dans une mémoire tampon (8), d'où elles sont lues vers ladite tête multiple d'impression, caractérisé en ce que leur écriture dans ladite mémoire tampon est effectuée ligne par ligne en sélectant les données de points de la colonne en cours de préparation d'impression et de la ligne horizontale qui suit celle dont les données ont déjà été écrites dans ladite mémoire tampon (8), ladite sélection des données à écrire étant effectuée soit sur la même trame de signaux vidéo, soit sur des trames différentes.

3. Procédé d'enregistrement suivant la revendication 1 ou 2, s'appliquant à des images comportant des plages coloriées dont les nuances sont déterminées par des combinaisons de couleurs primaires, qui sont numérisées séparément en code binaire, caractérisé en ce que chaque donnée numérisée de couleur primaire est transformée suivant un

algorithme A$_i^j$, où *j* identifie la couleur primaire et *i* est le rang du point dans une ligne horizontale, en un signal binaire qui est réuni avec les signaux binaires transformés des autres données de couleurs primaires du même point avant d'être imprimé.

4. Procédé d'enregistrement suivant la revendication 3, caractérisé en ce que, d'un ligne horizontale à la suivante, l'algorithme A$_i^j$ varie en fonction de *i*.

5. Système pour enregistrer sur un support matériel à deux dimensions une image de télévision stationnaire, comportant des moyens (3) pour numériser continûment les signaux vidéo de ladite image à une sortie (4), pour extraire du signal de télévision la synchronisation de ligne (6) et la synchronisation d'image (5) et pour, délivrer les signaux d'horloge de numérisation (7), une machine imprimante (22) à tête multiple d'impression sur ledit support matériel qui, à chaque passe transversale de la tête multiple d'impression, se décale de la largeur de celle-ci, une mémoire tampon (8) entre la sortie (7) des moyens de numérisation (3) et la machine imprimante (22), caractérisé en ce qu'il comprend encore un registre à décalage (9) à *k* étages dont l'entrée série de données est reliée à la sortie (4) des moyens de numérisation (3), dont les sorties parallèles sont reliées aux entrées de la mémoire tampon (8) dont les entrées et les sorties sont gérées indépendamment, les sorties de données de la mémoire tampon (8) étant reliées à l'entrée de données (24) de la machine imprimante (22), une porte ET à deux entrées (15) avec une entrée (7) à laquelle sont appliqués les signaux d'horloge et une autre entrée reliée à la sortie d'un premier circuit de comparison (16), une entrée dudit premier circuit de comparaison (16) étant reliée à la sortie de compte d'un premier compteur de colonnes (14) et son autre entrée étant reliée à la sortie de compte d'un second compteur de colonnes (17), l'entrée du premier compteur de colonnes (14) étant reliée à la sortie de débordement d'un compteur cyclique à *k* étages (13) alimenté à l'entrée (7) par le signal d'horloge de numérisation et l'entrée (25) du second compteur de colonnes (17) étant reliée à un détecteur d'avancement du support matériel dans la machine imprimante (22), un premier compteur de lignes (11) à l'entrée (5) de données duquel est appliquée la synchronisation de ligne et dont la sortie de compte est reliée à une entrée d'un second comparateur (18) dont la sortie est reliée à une entrée d'une porte ET à trois entrées (20), dont la seconde entrée est reliée à la sortie du premier comparateur (16) et la troisième entrée est reliée à une sortie de disponibilité (28) de la mémoire tampon (8), la sortie de la porte ET à trois entrées (20) étant reliée à l'entrée de commande d'écriture de la mémoire tampon (8) et à l'entrée d'un second compteur de lignes (19) dont la sortie est reliée à la seconde entrée du second comparateur (18), la mémoire tampon (8) comportant encore une sortie (21) indiquant l'occupation partielle de la mémoire (8) et reliée à l'entrée de commande de démarrage de la machine imprimante (22), et une sortie de lecture (23) reliée à une sortie de commande de lecture de la machine imprimante (22), les entrées de remise à zéro du premier compteur de colonnes (14) et du compteur cyclique de points (13) étant alimentées par la synchronisation de ligne (6), l'entrée de remise à zéro du premier compteur de lignes (11) étant alimentée par la synchronisation d'image (5).

6. Système suivant la revendication 5, caractérisé en ce qu'il comprend une mémoire tampon (29) fonctionnement alternativement en mode d'écriture, pour emmagasiner les données d'une ou d'un nombre entier de colonnes, et en mode de lecture, pour alimenter la machine imprimante (22), un compteur de lignes (30) dont la sortie de compte est reliée à l'entrée d'adressage d'écriture de ladite mémoire (29) et dont la sortie de débordement est reliée à un circuit commutation écriture-lecture (31) pour commander le passage en mode lecture et le fonctionnement de la machine imprimante (22), le circuit de commutation écriture-lecture (31) étant commuté par la détection de l'avancement du support matériel dans la machine imprimante (22) pour commander le passage de la mémoire (29) en mode écriture et la remise à zéro du compteur de lignes (30).

7. Système suivant la revendication 5 ou 6, prévu pour traiter des images de télévision en couleur, dans lequel les moyens de numérisation numérisent les signaux de chrominance pour délivrer par point trois données binaires de couleurs primaires, en plus des signaux binaires de luminance, caractérisé en ce que les sorties de chrominance (37V, 37R, 37B) des moyens de numérisation sont reliées aux entrées horizontales correspondantes d'un circuit de traduction matriciel (36) qui comportent *x* entrées de commande verticales, des points de croisement (47) étant prévus sélectivement à des intersections entre les horizontales et les verticales de la matrice du traducteur (36), chaque point de croisement (47) reliant son horizontale à la sortie du traducteur quand sa verticale est activée, les entrées verticales étant respectivement reliées aux sorties parallèles d'un registre à *x* cellules (39) dont l'entrée d'horloge est reliée à sortie d'une seconde porte ET à deux entrées (40) dont une entrée reçoit les signaux d'horloge de numérisation et une entrée est reliée à la sortie d'un registre à retard programmable (41) comportant une entrée de déclenchement recevant la synchro ligne (6), une entrée d'horloge recevant l'horloge de numérisation (7) et une entrée de commande manuelle (42), le registre à *x* cellules (39) comportant encore une entrée d'initialisation recevant la synchronisation de trame (5), la sortie du traducteur (36) étant reliée à une entrée d'une troisième porte ET à deux entrées (43) dont l'autre entrée est reliée à une sortie (38) de discrimination zone coloriée ou non du récepteur de télétexte et dont la sortie est reliée à une entrée d'une porte OU à deux entrées (44), la sortie (38) de discrimination zone coloriée ou non du récepteur de télétexte étant reliée par un inverseur (45) à une entrée d'une quatrième porte ET à deux entrées (46) dont la seconde entrée est reliée à la sortie luminance (4) des moyens de numérisation et dont la sortie est reliée à la seconde entrée de la porte OU (44) dont la sortie est reliée à l'entrée série du registre à décalage à $k$ étages (9).

**Patentansprüche**

1. Verfahren zum Registrieren eines ruhenden Fernsehbildes, dessen Videosignale kontinuierlich in einen binären Code umgesetzt werden, auf einem zweidimensionalen Träger mit Hilfe eines Druckgerätes mit Vielfachdruckkopf (22), der k Druckpunkte aufweist, so daß die erzeugten binären Muster ein Gitter von sich kontinuierlich wiederholenden Punkten darstellen, deren m horizontale Zeilen den Zeilen des Fernsehsignals entsprechen, wobei jede horizontale Zeile des Gitters n Punkte enthält, wobei m und n verglichen mit k groß sind, so daß sich de Druckkopf des Druckgerätes (22) während des Druckens quer zur Verschiebungsrichtung des Trägers verschiebt und daß der Träger nach jedem transversalen Arbeitsschritt des Druckkopfes um eine Länge verschoben wird, die der Breite des Mehrfachdruckkopfes entspricht, dadurch gekennzeichnet, daß die vertikalen Zeilen des Gitters durch selektives Zählen binärer Muster zu n/k Spalten (col. 1 bis col. 40) gruppiert werden, von denen jede k vertikale Zeilen (1—10 bis 391—400) enthält, daß die binären Punktdaten zum Druckkopf übertragen werden, indem mit den Daten (391—400) der ersten Zeile (1) und der letzten Spalte (col. 40) begonnen wird, worauf die Daten der zweiten horizontalen Zeile (2) und der letzten Spalte (col. 40) usw. bis zu den Daten der m-ten horizontalen Zeile der letzten Spalte folgen, daß der Träger anschließend verschoben wird, worauf zunächst die binären Punktdaten (381 bis 390) der ersten horizontalen Zeile (1) und der vorletzten Spalte (col. 39) auf den Druckkopf übertragen werden, danach diejenigen der zweiten horizontalen Zeile (2) der vorletzten Spalte (col. 39) usw. bis zu den Punktdaten der m-ten horizontalen Zeile der vorletzten Spalte, daß daraufhin der Träger erneut wie, zuvor verschoben wird und die Übertragungsvorgänge für die Punktdaten mit entsprechenden Unterbrechungen durch die Verschiebung des Kopfes Spalte für Spalte bis zum Druck der binären Punktdaten (1—10) der m-ten horizontalen Zeile der ersten Spalte (col. 1) wiederholt werden.

2. Verfahren nach Anspruch 1, wobei die binären Daten im Verlauf ihrer Übertragung zum Mehrfachdruckkopf durch einen Pufferspeicher (8) geleitet werden, von dem sie zu dem Mehrfachdruckkopf herausgelesen werden, dadurch gekennzeichnet, daß ihr Schreibvorgang im Pufferspeicher Zeile für Zeile erfolgt zur Auswahl der Punktdaten der Spalte während der Vorbereitung des Druckvorgangs und der horizontalen Zeile, die derjenigen folgt, deren Daten bereits in den Pufferspeicher (8) eingeschrieben worden sind, und daß die Auswahl der zu schreibenden Daten entweder in demselben Bild der Videosignale oder in unterschiedlichen Bildern vorgenommen wird.

3. Verfahren nach Anspruch 1 oder 2, dadurch gekennzeichnet, daß bei dessen Anwendung auf Bilder mit farbigen Bereichen, deren Farben durch Kombination von Primärfarben bestimmt sind, die gesondert in binäre Codes umgesetzt werden, alle digitalen Daten einer Primärfarbe gemäß einem Algorithmus $A^j_i$, in dem j die Primärfarbe und i den Rang des Punktes in einer horizontalen Zeile darstellt, in ein binäres Signal umgesetzt werden, das mit den umgesetzten binären Signalen vereinigt wird, die den anderen Primärfarbdaten desselben Punktes entsprechen, bevor der Druck erfolgt.

4. Verfahren nach Anspruch 3, dadurch gekennzeichnet, daß der Algorithmus $A^j_i$ sich von einer horizontalen Zeile zur nächsten als Funktion von i ändert.

5. System zum Registrieren eines ruhenden Fernsehbildes auf einem, zweidimensionalen Träger, mit Mitteln (3) zum kontinuierlichen Digitalisieren der Video-Signale des Bildes zu einem Ausgang (4) zum Herausziehen des Zeilensynchronisiersignals (6) und des Bildsynchronisiersignals (5) aus dem Fernsehsignal und zur Lieferung von digitalisierenden Taktsignalen (7), mit einem Druckgerät (22) mit Mehrfachdruckkopf auf dem Träger, der sich bei jedem transversalen Arbeitsschritt um die Breite des Mehrfachdruckkopfes verschiebt, mit einem Pufferspeicher (8) zwischen dem Ausgang (7) der digitalisierenden Mittel (3) und dem Druckgerät (22), dadurch gekennzeichnet, daß ein k-stufiges Schieberegister (9) vorgesehen ist, dessen Datenreiheneingang mit dem Ausgang (4) der digitalisierenden Mittel (3) und dessen parallele Ausgänge mit den entsprechenden Eingängen des Pufferspeichers (8) verbunden sind, dessen Eingänge und Ausgänge unabhängig voneinander steuerbar sind, daß die Datenausgänge des Pufferspeichers (8) mit dem Dateneingang (24) des Druckgerätes (22) verbunden sind, daß ein UND-Tor mit zwei Eingängen (15) vorgesehen ist, von denen einer (7) die Taktsignale empfängt, während der andere mit dem Ausgang einer erster Vergleichsschaltung (16) verbunden ist, daß ein weiterer Eingang der ersten Vergleichsschaltung (16) mit dem Zählausgang eines ersten Spaltenzählers (14) und der andere Eingang mit dem Zählausgang eines zweiten Spaltenzählers (17) verbunden ist, daß der Eingang des ersten Spaltenzählers (14) mit dem Überschußaus-

gang eines zyklischen k-stufigen Zählers (13) verbunden ist, der mit den digitalisierenden Taktimpulsen am Eingang (7) gespeist wird, während der Eingang (25) des zweiten Spaltenzählers (17) mit Detektormitteln verbunden ist, die eine Verlagerung des Trägers in dem Druckgerät (22) feststellen, daß ein erster Zeilenzähler (11) vorgesehen ist, dessen Dateneingang (5) Zeilensynchronisationsimpulse empfängt, und dessen Zählausgang mit dem einen Eingang einer zweiten Vergleichsschaltung (18) verbunden ist, deren Ausgang mit dem Eingang eines drei Eingänge aufweisenden UND-Tores (20) verbunden ist, dessen zweiter Eingang mit dem Ausgang der ersten Vergleichsschaltung (16) und dessen dritter Eingang mit dem inaktiven Ausgang (28) des Pufferspeichers (8) verbunden ist, daß der Ausgang des die drei Eingänge (20) aufweisenden UND-Tores mit dem Schreibsteuereingang des Pufferspeichers (8) und dem Eingang eines zweiten Zeilenzählers (19) verbunden ist, dessen Ausgang mit dem zweiten Eingang der zweiten Vergleichsschaltung (18) verbunden ist, wobei der Pufferspeicher (8) noch einen Ausgang (21) enthält, der den teilweise besetzten Zustand des Speichers (8) angibt und mit dem Startsteuereingang des Druckgerätes (22) verbunden ist, daß ein Leseausgang (23) mit dem Lesesteuerausgang des Druckgerätes (22) verbunden ist, daß die Rückstelleingänge des ersten Spaltenzählers (14) und des zyklischen Punktzählers (13) mit den Zeilensynchronisationssignalen (6) gespeist werden, während der Rückstelleingang des ersten Zeilenzählers (11) mit den Bildsynchronisationssignalen gespeist wird.

6. System nach Anspruch 5, dadurch gekennzeichnet, daß dieses einen Pufferspeicher (29) enthält, der abwechselnd entweder im Schreibbetrieb zur Speicherung der Daten, die einer Spalte oder einer ganzen Anzahl von Spalten entspricht, oder im Lesebetrieb zur Speisung des Druckgerätes (22) arbeitet, daß ein Zeilenzähler (30) vorgesehen ist, dessen Zählausgang mit dem Schreibadressiereingang des Pufferspeichers (29) und dessen Überschußausgang mit einem Schreib/Lese-Umschaltkreis (31) zur Auslösung des Schalters auf Lesebetrieb und des Startvorganges für das Druckgerät (22) verbunden ist, wobei der Schreib/Lese-Umschaltkreis (31) durch Detektormittel zurückgeschaltet wird, die die Verschiebung des Trägers im Druckgerät (22) feststellen, wodurch eine Umschaltung des Pufferspeichers (29) auf Schreibbetrieb und eine Rückstellung des Zeilenzählers (30) auf Null erfolgt.

7. System nach Anspruch 5 oder 6 zum Verarbeiten von Farbfernsehbilden, wobei die digitalisierenden Mittel die Chrominanzsignale auftasten, um zusätzlich zu den Luminanzbits drei binäre Primärfarbdaten zu gewinnen, dadurch gekennziehnet, daß die Chrominanzausgänge (27 V, 37 R, 37B) der digitalisierenden Mittel mit den entsprechenden Horizontaleingängen einer Matrix-Konverterschaltung (36) verbunden sind, die x vertikale Steuereingänge besitzt, daß die Kreuzungspunkte (47) in der Matrix-Konverterschaltung (36) wahlweise an bestimmten ausgewählten Schnittstellen zwischen horizontalen und vertikalen Linien der Konverterschaltung (36) angeordnet werden, daß jeder Kreuzungspunkt (47) seine horizontale Linie mit dem Konverterausgang koppelt, wenn seine vertikale Linie aktiviert ist, wobei die entsprechenden vertikalen Eingänge mit den parallelen Ausgängen eines x-stufigen Registers (39) verbunden sind, dessen Takteingang mit dem Ausgang eines zweiten, mit zwei Eingängen versehenen UND-Tores (40) verbunden ist, dessen einer Eingang digitalisierende Taktsignale empfängt und dessen einer Eingang mit dem Ausgang eines Verzögerungsregisters (41) verbunden ist, der einen Steuereingang zum Empfang der Zeilensynchronisationssignale (6), einen Takteingang zum Empfang digitalisierender Taktsignale (7) une einen von Hand steuerbaren Eingang (42) aufweist, daß das x-stufige Register (39) ferner einen Initialisierungseingang enthält, der die Bildsynchronisationssignale (5) empfängt, daß der Konverterausgang (36) mit dem einen Eingang des dritten, mit zwei Eingängen versehenen UND-Tores (43) verbunden ist, dessen anderer Eingang mit einem Unterscheidungsausgang (38) zum Unterscheiden eines Farbbereichs von einem nicht farbigen Bereich eines Teletextempfängers verbunden ist, und dessen Ausgang mit einem Eingang eines ODER-Tores (44) mit zwei Eingängen verbunden ist, wobei der Unterscheidungsausgang (38) zum Unterscheiden der farbigen von den nicht farbigen Bereichen des Teletextempfängers über einen Umschalter (45) mit dem Eingang eines vierten UND-Tores (46) mit zwei Eingängen verbunden ist, dessen zweiter Eingang mit dem Luminanzausgang (4) der digitalisierenden Mittel verbunden ist, dessen Ausgang mit dem zweiten Eingang des ODER-Tores (44), verbunden ist, dessen Ausgang mit dem Serieneingang des k-stufigen Verschieberegisters (9) verbunden ist.

**Claims**

1. A process for registering onto an actual two-dimensional support, by means of a printing machine (22) provided with a multiple printing head having $k$ print points, a steady television picture the video signals of which are continuously converted into binary code, the produced binary samples thus representing a grid of points, that are continuously repeated, wherein the $m$ horizontal correspond to the television signal lines, each horizontal grid line comprising $n$ points, $m$ and $n$ being large numbers with respect to $k$, the printing machine (22) having its printing head moving transversally with respect to the shift direction of the actual two-dimensional support in printing condition, and, after each printing head transverse run, the actual two-dimensional support being shifted by a length corresponding to the width of the multiple printing head, characterized by the fact that the vertical lines are grouped by selective counting of binary samples to form n/k columns (COL.1—CO.40) each comprising $k$ vertical lines (1—10 to 391—400), the point binary data being transmitted to the said multiple printing head starting with the binary data of the points (391—400) of the first horizontal line (1) and the last column (COL. 40), then those of the second horizontal line (2) and the last column (CO 40), and so on up to those of the $m^{th}$ horizontal line and the last column, the actual support, then the binary data of the points (381—390) of the first horizontal line (1) and the last but one column (COL. 39) are transmitted to the said printing head, then those of the second line (2) and the last but one column (COL. 39), and so on up to those of the $m^{th}$ horizontal line and the last but one column, then the actual support is again shifted as previously, and those point binary data transmission operations, interrupted by head shifts, are repeated column by column up to print the binary data of the points of the $m^{th}$ horizontal line of the first column (COL. 1).

2. A process according to claim 1, wherein, in the course of the binary data transmission to the printing head, said binary data pass through a buffer memory (8) from which they are read out to the said printing head, characterized by the fact that binary data write operation to said buffer memory is performed line by line in selecting the point binary data belonging to the column under printing and to the horizontal line that follows the one whose point binary data have just been written into the said buffer memory (8), the said selection of data to be written being made either in the same frame of video signals or in different frames.

3. A process according to either claim 1 or 2, applied to pictures including colored areas the colors of which are determined by combination of primary colors that are separately converted into binary code, characterized by the fact that each digital data of a primary color is converted according to an algorithm $A_i^j$, wherein $j$ identifies the primary color and $i$ is the rank of the point in a horizontal line, into a binary signal that is ORed with the converted binary signals corresponding to the other primary color data of the same point, before being printed.

4. A process according to claim 3, characterized by the fact that from a horizontal line to the next one the algorithm $A_i^j$ varies as a function of $i$.

5. A system for registering onto an actual two-dimensional support a steady television picture, comprising means (3) for continuously digitizing the video signals of the said picture at an output (4), for extracting from the television signal the line synchronisation (6) and frame synchronisation (5), and for delivering clock signal (7), a printing machine (22) with multiple printing head for printing the said actual support that is, for each transverse run of the multiple printing head, shifted by the width of said printing head, a buffer memory (8) coupled from the output (7) of the digitizing means (3) and the printing machine (22), characterized by the fact that it further comprises a k-stage shift register (9) whose data serial input is connected from the output (4) of the digitizing means (3) and parallel outputs are connected to respective inputs of buffer memory (8) having independently controlled input operation and output operation, data outputs of buffer memory (8) being connected to the data input (24) of the printing machine (22), an two-input AND gate (15) having one input (7) receiving the clock signals and the other input connected from the output of a first comparator means (16), one input of said first comparator means (16) being connected from the data output of a first column counter (14) and the other input being connected from the data output of a second column counter (17), the input of the first column counter (14) being connected from the overflow output of a cyclic k-stage counter (13) fed through input (7) with the digitizing clock signals and the input (25) of the second column counter (17) being connected to a detecting means detecting actual support shift in the printing machine (22), a first line counter (11) the data input (5) of which receives line synchronisation and the data output of which is connected to one input of a second comparator (18) whose output is connected to one input of a 3-input AND gate (20) having a second input connected from the output of the first comparator (16) and a third input connected from the idle output (28) of the buffer memory (8), the output of the 3-input AND gate (20) being connected to the write control input of the buffer memory (8) and the input of the second line counter (19) whose output is connected to the second input of the second comparator (18), the buffer memory (8) still comprising an output (21) indicating the partial busy condition of memory (8) and being connected to the start control input of the printing machine (22), and a read input (23) connected from the read control output of the printing machine (22), reset inputs of said first column counter (14) and cyclic point counter (13) being fed with line synchronization (6), and reset input of the first line counter (11) being fed with the frame synchronisation (5).

6. A system according to claim 5, characterized by the fact that it further comprises a buffer memory (29) alternatively operating either in write mode for storing the data corresponding to a column or an integer number of columns, or in read mode to feed the printing machine (22), a line counter (30) whose data output is connected to the write addressing input of said buffer memory (29) and overflow output is connected to a write-read switching circuit (31) for triggering the switch to read mode and the start operation for the printing machine (22), the write-read switching circuit (31) being switched back by detecting means detecting the shift of the actual support in the printing machine (22) for switching said buffer memory (29) to read mode and resetting the line counter (30).

7. A system according to either claim 5 or 6, for processing coloured television picture, wherein digitizing means are sampling the chrominance signals to deliver three primary colour binary data for each point, in addition to the luminance bits, characterized by the fact that the primary chrominance outputs (37V, 37R, 37B) from digitizing means are connected to corresponding horizontal inputs of a matrix converter circuit (36) having $x$ vertical control inputs, crosspoints (47) being selectively located in the converter matrix (36) at certain selected crossings between horizontal and vertical lines, each crosspoint (47) connecting the input coupled to the concerned horizontal line to the converter circuit output when the concerned vertical line is enabled, the vertical inputs being respectively connected from parallel outputs of a x-stage shift register (39) whose clock input is connected from the output of a second 2-input AND gate (40) with one input receiving digitizing clock signals and the other input connected from the output of a programmable delay register (41) having an enable input receiving line synchronization (6), a clock input receiving digitizing clock signals (7) and a manually controlled input (42), the x-stage shift register (39) further having a set input receiving the frame synchronization (5), the output of the converter (36) being connected to one input of a third 2-input AND gate (43) having the other input connected from an output (38) of the teletext receiver discriminating whether or not a area is coloured, and the output connected to one input of a 2-input OR gate (44), the output (38) of the teletext receiver discriminating whether or not an area is coloured being connected, via an inverter (45), to one input of a fourth 2-input AND gate (46) having the other input connected to luminance output (4) of the digitizing means and the output connected to the other input of the 2-input gate (44) whose output is connected to the serial input of the k-stage shift register (9).

FIG.1

FIG.2

FIG.3

FIG.4